# DEMANDE DE BREVET EUROPEEN

(11) **EP 1 079 590 A1**
(43) Date de publication de la demande: **28.02.2001**
(21) Numéro de dépôt: 00202887.6
(22) Date de dépôt: 17.08.2000
(51) Int. Cl.: H04M 17/00

(54) **Appareil comprenant un dispositif de prépaiement et procédé pour détecter une copie de mémoire**

(30) Priorité: 26.08.1999 FR 9910809
(71) Demandeur: Koninklijke Philips Electronics N.V., 5621 BA Eindhoven (NL)
(72) Inventeur: Antony, Olivier, 75008 Paris (FR)
(74) Mandataire: Chaffraix, Jean

(57) **Abrégé**

Cet appareil comprend un dispositif de prépaiement formé, notamment, d'une mémoire de crédit (25) dans laquelle un premier emplacement est prévu pour contenir une information de crédit. On a prévu pour cette mémoire de crédit des moyens de surveillance constitués par :
- une mémoire de référence (5),
- des détecteurs d'événements (30) pour former une marque à enregistrer dans ladite mémoire de référence et dans ladite mémoire de crédit,
- des moyens pour comparer lesdites marques, mis en oeuvre pour un contrôle de la mémoire de crédit.

On évite ainsi une altération frauduleuse de la mémoire de crédit.
Application : téléphone portable.

## Description

L'invention concerne un appareil comprenant un dispositif de prépaiement formé, notamment :
- d'une mémoire de crédit dans laquelle un premier emplacement est prévu pour contenir une information de crédit,
- de moyens de surveillance de ladite mémoire de crédit.

L'invention trouve d'importantes applications lorsque l'appareil est un radiotéléphone mobile utilisé dans un système permettant le prépaiement qui incite à la fraude. Dans des systèmes téléphoniques à prépaiement, le capital de communications allouées est contenu dans la mémoire de crédit qui se situe dans l'appareil de téléphone mobile. Il y a lieu de veiller à ce que cette mémoire ne soit pas falsifiée voire échangée par une autre mémoire de façon à ce que son contenu corresponde à un maximum de crédit.

L'invention concerne donc également un procédé pour détecter une altération de la mémoire de crédit.

Un tel appareil est connu du brevet des Etats-Unis d'Amérique n^{o} 5 301 234. Selon ce dispositif connu, on utilise une carte de prépaiement et on s'assure que la carte contenant le crédit de communications est correctement débitée. Pour cela, des échanges d'informations sont effectués entre l'appareil et une station de rattachement, ceci occasionne donc une surcharge de trafic plutôt préjudiciable au trafic téléphonique global.

La présente invention propose un dispositif du genre mentionné dans le préambule, qui évite que les moyens de surveillance soient trop dépendants de la station de rattachement.
Pour cela, un tel appareil est remarquable en ce que lesdits moyens de surveillance sont constitués par :
- une mémoire de référence,
- des détecteurs d'événements pour former une marque à enregistrer dans ladite mémoire de référence et dans ladite mémoire de crédit,
- des moyens pour comparer lesdites marques, mis en oeuvre pour un contrôle de la mémoire de crédit.

Selon l'invention, le procédé pour détecter une copie d'une mémoire, dite mémoire de crédit, est remarquable en ce que l'on prévoit une mémoire de référence pour emmagasiner, en même temps que ladite mémoire de crédit, une marque créée arbitrairement.

La description suivante, faite en regard des dessins ci-annexés, le tout donné à titre d'exemptes non limitatifs fera bien comprendre comment l'invention peut être réalisée, Sur les dessins :
La figure 1 montre un appareil conforme à l'invention,
La figure 2 montre le schéma de l'appareil de la figure 1,
La figure 3 montre un premier organigramme montrant la création d'une marque à enregistrer,
La figure 4 montre un deuxième organigramme montrant la mise en oeuvre des moyens de surveillance,
La figure 5 montre la gestion du crédit.

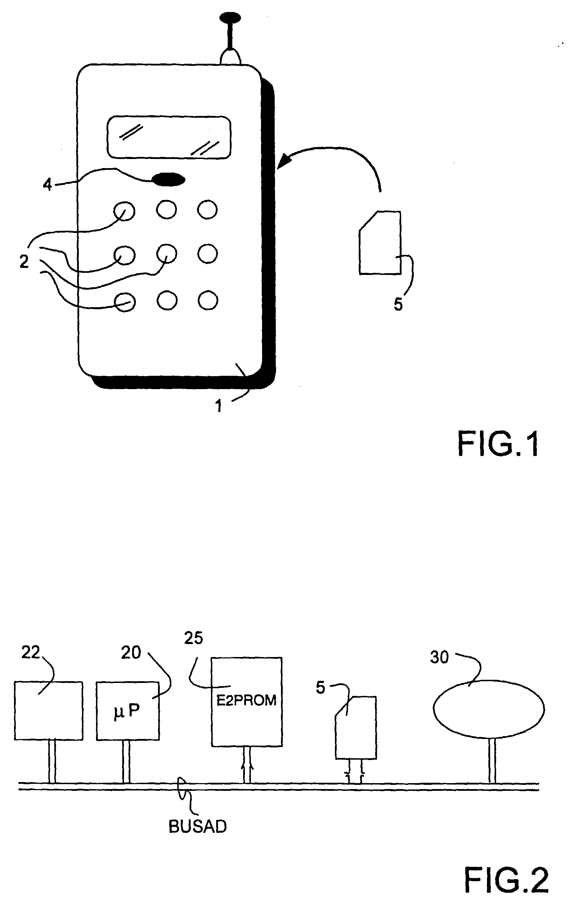

A la figure 1, on a représenté un appareil de téléphonie mobile 1. Cet appareil comporte un clavier 2, une touche de prise de ligne 4 et une carte SIM 5 se branchant à l'arrière comme l'indique la flèche.

La figure 2 montre la structure de l'appareillage électronique de l'appareil de la figure 1. Seuls les éléments participant à l'invention sont représentés. Cet appareillage est constitué à partir d'un ensemble de commande à microprocesseur 20 qui régente le fonctionnement. Il comporte la mémoire contenue dans la carte SIM 5, une mémoire de travail 22, une mémoire de type EEPROM 25 et un détecteur d'événements 30. Tous ces éléments sont reliés par une ligne commune BUSAD. C'est la mémoire 25 qui contient les informations de crédit de communications téléphoniques. Ces informations sont transmises depuis une station de rattachement en utilisant les services SMS (Short Message Services) bien connus dans le domaine de la radiotéléphonie cellulaire.

Conformément à l'invention, un événement détecté par le détecteur 30 provoque l'apparition d'une marque 〈〈 M 〉〉 qui est enregistrée à la fois dans une mémoire de référence et dans la mémoire 25 à protéger. Cette mémoire de référence peut être comprise dans la mémoire 22 ou alors, selon un mode de réalisation préféré, dans la carte SIM 5. Ainsi, si on veut remplacer le contenu de la mémoire 25 par son contenu initial, donc contenant un maximum de crédit, cette marque sera différente de la marque officielle contenue dans la mémoire de référence, puisque le nouveau contenu frauduleux n'a jamais été concerné par les marques d'événement.

Ce qu'on entend par événement est, par exemple, la mise en route de l'appareil, ou de faire un appel ; à chacun de ces événements on crée une marque différente. Ces événements sont signifiés par un appui plus ou moins long de la touche 4 qui permet ainsi la mise en route de l'appareil, la prise de ligne, la fin de la communication et l'arrêt de l'appareil.

Cette marque différente peut être un nombre 〈〈 Nb 〉〉 qui s'incrémente à chacun de ces événements de sorte que la mémoire frauduleuse, établie en dehors de l'appareil ne peut pas contenir ce nombre. Le tableau ci-dessous explicite cette notion en fonction de différents incidents.

**TABLEAU I**

| Incident : | *(1)* | *(2) COPIE DE E2PROM* | *(3) Mise en route* | *(4) TEST* SIM = E2PROM ? | *(5) Appel* | *(6) Mise en place de la copie de L'E2PROM* |
|---|---|---|---|---|---|---|
| SIM | 5 | 5 | 5 | 6 | 7 | 7 |
| E2PROM | 5 | 5 | 5 | 6 | 7 | 5 |
| COPIE DE-L'E2PROM | | 5 | 5 | 5 | 5 | |

**TABLEAU I(suite)**

| Incident : | (7) Mise en *route* | *(8) TEST* SIM = E2PROM ? | *(9) Blocage de l'appareil.* |
|---|---|---|---|
| SIM | 7 | 7 | 7 |
| E2PROM | 5 | 5 | 5 |
| COPIE DE-L'E2PROM | - | - | - |

Sur ce tableau, les colonnes (1) à (7) représentent différents incidents qui peuvent survenir à un appareil.
La colonne (1) montre l'état initial. Les marques 〈〈 Nb 〉〉 contenues dans les mémoires E2PROM et la mémoire SIM sont identiques et égales à 5.
La colonne (2) est relative à la copie de l'E2PROM, sa marque est donc 5.
La colonne (3) montre la mise en route.
La colonne (4) explicite le test qui se fait après cette mise en route. Le test est évidemment satisfaisant, la marque 〈〈 Nb 〉〉 croît donc d'une unité : Nb=6
La colonne (5) est un appel considéré aussi comme un événement, le nombre 〈〈 Nb 〉〉 est augmenté d'une unité Nb=7.
La colonne (6) concerne la mise en place ou la recharge de la mémoire E2PROM, donc les marques sont différentes : 7 pour la mémoire SIM et 5 pour la mémoire E2PROM.
La colonne (7) indique la mise en route de l'appareil.
La colonne (8) indique le test qui suit, la discordance des marques est alors flagrante.
La colonne (9) indique le blocage de l'appareil en conséquence.

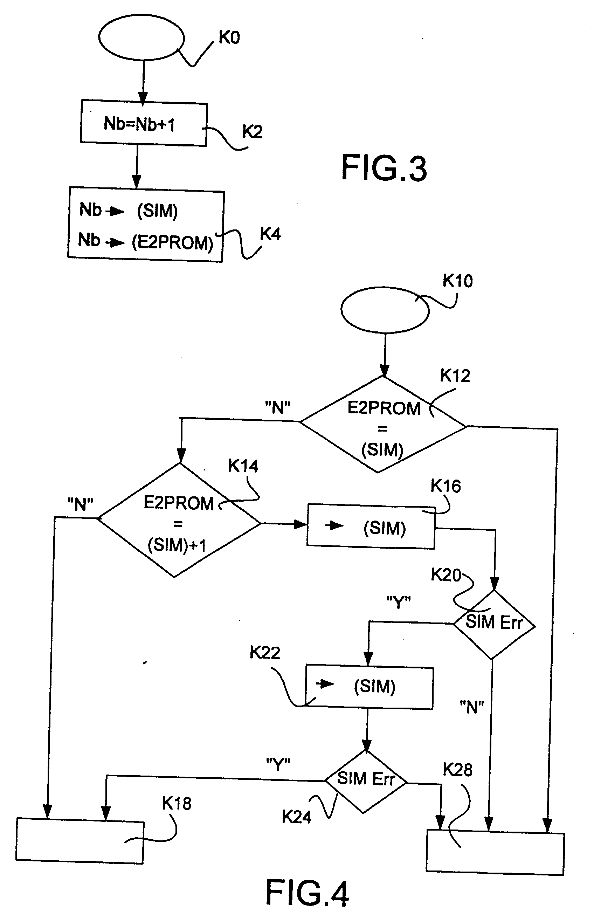

La figure 3 explicite plus en détail l'inscription des marques, constituées ici par le nombre 〈〈 Nb 〉〉 dans les mémoires de crédit 25 et la mémoire de référence 5. Lorsqu'un événement surgit, case K0, on incrémente un nombre Nb de 1 unité, case K2. Ce nouveau nombre est enregistré dans lesdites mémoires 5 et 25, case K4.

La figure 4 montre comment est validée la mémoire de crédit. Cette validation démarre dès la mise en route de l'appareil, case K10. La case K12 indique le test de comparaison des marques enregistrées dans les mémoires SIM 5 et la mémoire E2PROM 25. Si l'égalité n'est pas constatée, on effectue un autre test, case K14 avec le contenu augmenté d'une unité de la marque contenue dans la mémoire SIM, ce qui permet une certaine tolérance. Si le test de la case K14 est bon, alors on met à jour le contenu de la mémoire SIM, case K16. Si le test indiqué à la case K14 n'est pas bon, alors l'appareil est bloqué et aucune communication ne peut être établie, case K18. On vérifie cependant que la mise à jour s'est correctement déroulée, case K20. Si une erreur-se produit alors on effectue une mise à jour supplémentaire, case K22, et on effectue une autre vérification de cette mise à jour K24. Si l'erreur persiste, on bloque l'appareil, on va donc à la case K18. Si finalement la mise à jour s'est bien effectuée, on va à la case K28 qui indique que l'appareil est prêt à fonctionner. C'est à cette case que l'on va, lorsque les tests indiqués aux cases K12 et K20 (pas d'erreur) sont satisfaisants.

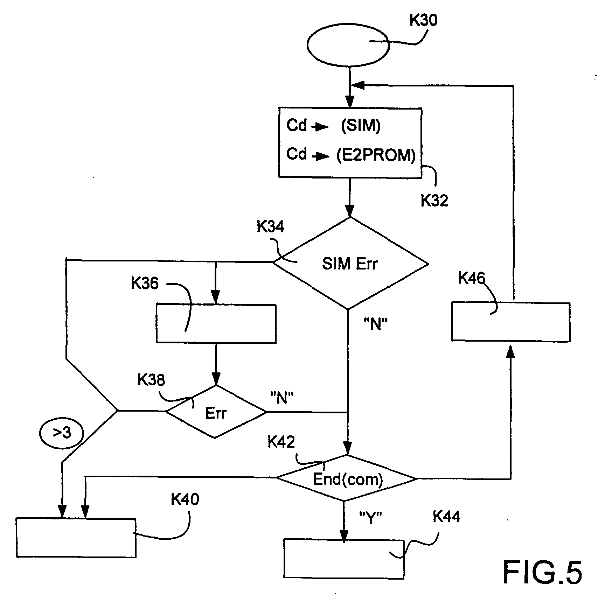

La figure 5 montre comment se déroule la gestion de la mémoire de crédit. Le montant du crédit provient notamment de messages reçus (messages SMS "Short Messages Service" bien connus dans le domaine des radiotéléphones cellulaires). Ce fonctionnement débute dès qu'une communication est établie, case K30. Il convient alors d'inscrire le nouveau crédit " Cd " alloué case K32, puis on vérifie case K34 que cette inscription s'est bien déroulée dans la carte SIM. Si on détecte des erreurs, on réessaye une inscription case K36, et on teste à nouveau cette inscription, case K38. En fait, avant de couper la communication, on réessaye trois fois de mette à jour le crédit (dans la mémoire E2PROM, donc) et de bloquer l'appareil (case K40). Si l'inscription s'est faite, on va à la case K42 qui teste la fin de la communication. Si c'est la fin de la communication, le crédit est mis à jour dans les deux mémoires 5 et 25. Sinon on attend, case K46 l'intervalle de communication auquel est affectée une taxe, le crédit est alors mis à jour, à la case K32.

## Revendications

1. Appareil comprenant un dispositif de prépaiement formé, notamment :
- d'une mémoire de crédit dans laquelle un premier emplacement est prévu pour contenir une information de crédit,
- de moyens de surveillance de ladite mémoire de crédit,
caractérisé en ce que lesdits moyens de surveillance sont constitués par :
- une mémoire de référence,
- des détecteurs d'événements pour former une marque à enregistrer dans ladite mémoire de référence et dans ladite mémoire de crédit,
- des moyens pour comparer lesdites marques, mis en oeuvre pour un contrôle de la mémoire de crédit.

2. Appareil selon la revendication 1 comportant un circuit pour recevoir une carte d'indentification (carte SIM) caractérisé en ce que la mémoire de référence est contenue dans ladite carte d'identification.

3. Appareil selon la revendication 1 ou 2 caractérisé en ce qu'il comporte des moyens de détermination de marque en se basant sur l'apparition de certains événements provoqués par l'utilisation de l'appareil.

4. Appareil selon la revendication 3 caractérisé en ce qu'il comporte un incrémenteur d'apparition d'événements dont le contenu constitue ladite marque.

5. Appareil selon l'une des revendications 1 à 4 caractérisé en ce que lesdits moyens pour comparer lesdites marques emmagasinées dans la mémoire de référence et dans la mémoire de crédit sont conçus pour permettre une certaine tolérance dans la comparaison.

6. Procédé convenant à un appareil selon l'une des revendications 1 à 5, pour détecter une copie d'une mémoire, dite mémoire de crédit, caractérisé en ce que l'on prévoit une mémoire de référence pour emmagasiner, en même temps que ladite mémoire de crédit une marque créée arbitrairement.

7. Procédé selon la revendication 6 caractérisé en ce que l'on prévoit une étape de comparaison pour rejeter ladite mémoire de crédit lorsqu'une différence entre la marque emmagasinée dans la mémoire de référence et la mémoire de crédit est décelée.
